# EUROPÄISCHE PATENTSCHRIFT

(11) **EP 4 301 633 B1**
(45) Veröffentlichungstag und Bekanntmachung des Hinweises auf die Patenterteilung: **28.01.2026**
(21) Anmeldenummer: 22709302.8
(22) Anmeldetag: 24.02.2022
(51) Int. Cl.: B60R 22/343, B60R 22/40, B60R 22/48

(54) **GURTAUFROLLER-EINHEIT UND FAHRZEUG MIT EINER SOLCHEN GURTAUFROLLER-EINHEIT**
BELT RETRACTOR UNIT AND VEHICLE HAVING SUCH A BELT RETRACTOR UNIT
UNITÉ DE RÉTRACTEUR DE CEINTURE ET VÉHICULE DOTÉ DE LADITE UNITÉ DE RÉTRACTEUR DE CEINTURE

(30) Priorität: 04.03.2021 DE 102021105277
(43) Veröffentlichungstag der Anmeldung: 10.01.2024
(73) Patentinhaber: Autoliv Development AB, 447 83 Vårgårda (SE)
(72) Erfinder: RINGS, Philip, 22846 Norderstedt (DE); PAWLOWSKI, Martin, 25587 Münsterdorf (DE); HINRICHS, Heiko, 25782 Welmbüttel (DE)
(74) Vertreter: Schön, Thilo
(86) Internationale Anmeldenummer: PCT/EP2022/054640
(87) Internationale Veröffentlichungsnummer: WO 2022/184541

(56) Entgegenhaltungen:
- WO-A1-2004/065184
- GB-B- 2 398 824

## Beschreibung

Die Erfindung betrifft eine Gurtaufroller-Einheit nach dem Oberbegriff des Anspruchs 1.

Jedes moderne Personenkraftfahrzeug, aber auch die meisten LKW, Busse und dergleichen weisen Sicherheitsgurtsysteme auf. Ein solches Sicherheitsgurtsystem hat stets eine Gurtaufroller-Einheit, welche wiederum einen Gurtaufroller mit einem Gehäuse und einer drehbar in diesem Gehäuse gelagerten Gurtspule aufweist. Ein Teil des Gurtbandes des Sicherheitsgurtsystems ist auf dieser Gurtspule aufgewickelt und der Nutzer kann es gegen die Kraft einer zwischen Gurtspule und Gehäuse wirkenden Rückstellfeder von der Gurtspule abwickeln. Es ist weiterhin eine Blockiereinrichtung vorgesehen, welche einen Freigabezustand, in welchem die Gurtspule nicht gegen das Gehäuse blockiert ist, und einen Blockierzustand, in welchem die Gurtspule gegen das Gehäuse blockiert ist, aufweist. Diese Blockiereinrichtung weist in der Regel zwei voneinander unabhängige Sensoren auf, nämlich einen gurtsensitiven Sensor, welcher die Drehung der Gurtspule sensiert, und einen fahrzeugsensitiven Sensor, welcher die Fahrzeuglage und/oder die Fahrzeugbeschleunigung (insbesondere die negative Fahrzeugbeschleunigung, also die Verzögerung) sensiert. In normalen Fahrzuständen, also wenn das Gurtband nicht zu schnell ausgezogen wird und das Fahrzeug keine ungewöhnliche Lage hat und keine ungewöhnliche Beschleunigung erfährt, befindet sich die Blockiereinrichtung in ihrem unblockierten Zustand und der Nutzer kann das Gurtband ausziehen, sodass er sich relativ frei bewegen kann. Wird das Gurtband jedoch zu schnell ausgezogen und/oder bremst das Fahrzeug beispielsweise zu schnell ab, und/ oder kippt das Fahrzeug zu stark aus seiner Normalorientierung heraus, geht die Blockiereinrichtung in ihrem blockierten Zustand über.

Derzeit sind die Blockiereinrichtungen zumeist vollständig mechanisch ausgebildet, was zur Folge hat, dass die komplette Blockiereinrichtung (einschließlich der Sensoren) starr mit dem Gehäuse des Gurtaufrollers verbunden ist. Diese starre Verbindung der gesamten Blockiereinrichtung mit dem Gehäuse hat jedoch Nachteile, insbesondere wenn die Gurtaufroller-Einheit am Fahrzeugsitz, insbesondere dessen Rückenlehne befestigt ist, da sich in diesem Fall die Position des Gurtaufrollers und damit auch des fahrzeugsensitiven Sensors relativ zum Fahrzeug ändern kann.

Es sind deshalb auch ganz oder teilweise elektrisch arbeitende Gurtaufroller-Einheiten bekannt geworden, deren Blockiereinrichtung eine mit dem Gehäuse verbundene Blockiereinheit mit einem Elektromagnet und eine Steuereinrichtung zur Ansteuerung des Elektromagneten aufweist. Der Elektromagnet ist Teil einer elektrisch ansteuerbaren Aktuatoreinheit derart, dass der Zustand der Aktuatoreinheit (insbesondere stromlos oder stromdurchflossen) den Zustand der Blockiereinheit (Gurtspule drehbar oder Gurtspule blockiert) festlegt. Normalerweise weist die Blockiereinheit weiterhin ein dem Elektromagnet entgegenwirkendes Rückstellelement (meist in Form einer Feder) auf. Dieses Rückstellelement kann Teil der Aktuatoreinheit sein. Aus Sicherheitsgründen (fail safe) ist hierbei der stromlose Zustand in der Regel der blockierte Zustand (Notfall-Zustand) und der stromdurchlossene Zustand ist der entriegelte Zustand (Freigabe-Zustand). Dementsprechend weist die die Aktuatoreinheit ansteuernde Steuereinrichtung, welche einen mit dem Bordnetz verbundenen Leistungseingang und einen mit dem Elektromagneten verbundenen Leistungsausgang aufweist, einen passiven Schaltzustand, in welchem die Stromzufuhr vom Leistungseingang zum Leistungsausgang unterbrochen ist, und einen aktiven Schaltzustand, in welchem der Leistungseingang mit dem Leistungsausgang verbunden ist und deshalb Strom durch den Elektromagneten fließt, auf. Diese Steuereinrichtung, welche mit der Blockiereinheit in der Regel ausschließlich elektrisch gekoppelt ist, kann in diesem Fall an beliebiger Stelle des Fahrzeugs angeordnet sein, insbesondere so, dass sie sich nicht mit der Rückenlehne bewegt. Die Steuereinrichtung weist wenigstens eine Sensoreinrichtung und eine Schalteinrichtung zur Ansteuerung der Aktuatoreinheit in Abhängigkeit der von der Sensoreinrichtung gelieferten Daten auf. Die Steuereinrichtung kann eine bauliche Einheit bilden, muss dies aber nicht.

Das wichtigste Kriterium für den Übergang vom Freigabe-Zustand in den Notfall-Zustand ist, dass der Betrag wenigstens eines horizontalen Beschleunigungswertes einen Grenzwert überschreitet. Oft ist es nicht notwendig, zwischen Beschleunigungen in der Fahrzeuglängsrichtung (X-Richtung) und der Fahrzeugquerrichtung (Y-Richtung) zu unterscheiden und es wird nur der Betrag der Beschleunigung in der XY-Ebene betrachtet.

Eine gattungsgemäße Gurtaufroller-Einheit mit einer solchen Blockiereinheit und einer solchen Steuereinrichtung ist beispielsweise in der GB 23 98 824 B oder der WO 2004/065184 A1 beschrieben. Derartige elektrisch arbeitende Gurtaufroller-Einheiten haben noch weitere Vorteile, da sie mehr Möglichkeiten bieten, den Zustand der Gurtaufroller-Einheit (blockiert / nicht blockiert) zu steuern.

Hiervon ausgehend stellt sich die vorliegende Erfindung die Aufgabe, eine gattungsgemäße Gurtaufroller-Einheit weiter zu verbessern.

Diese Aufgabe wird durch eine Gurtaufroller-Einheit mit den Merkmalen des Anspruchs 1 gelöst.

Um den Insassen möglichst gut zu schützen, ist es in der Regel zweckmäßig, dass sich die Gurtbandverriegelung schon zu einem frühen Zeitpunkt, insbesondere auch schon bevor der eigentliche Unfall stattfindet, beispielsweise wenn das Fahrzeug stark abbremst, aktiviert. Hierfür sollte der Grenzwert des Betrages der Horizontalbeschleunigung, ab welchem die Gurtbandverriegelung einsetzt, relativ niedrig sein. Dies hat jedoch die Konsequenz, dass die Gurtaufroller-Einheit zumindest bei manchen Anforderungsprofilen relativ häufig in ihren blockierten Zustand (im Weiteren auch als Notall-Zustand bezeichnet) übergeht, obwohl gar keine Gefahr vorliegt, die Blockierung der Gurtspule also im Ergebnis unnötig ist und dann auch wieder aufgehoben wird. Dies ist für sich genommen nicht weiter schlimm und wird zugunsten der insgesamt verbesserten Insassensicherheit auch Kauf genommen.

Es hat sich jedoch herausgestellt, dass bei einer Wahl des Grenzwertes, welcher für die Fahrzeuginsassensicherheit bevorzugt ist (also eines niedrigen Grenzwertes) insbesondere bei schlechten Straßenverhältnissen der Fall eintreten kann, dass die Gurtblockierung schon aufgrund von Rüttelbewegungen des Fahrzeugs in ihren Notfall-Zustand, in welchem die Gurtspule gegen das Gehäuse blockiert ist, übergeht. Auch dies ist für sich genommen noch nicht problematisch. Es hat sich jedoch weiterhin herausgestellt, dass insbesondere im eben beschriebenen Fall häufig das Problem auftreten kann, dass die auf das Fahrzeug (und somit auch auf die Sensoreirichtung) wirkenden Beschleunigungskräfte bei schlechten Straßenverhältnissen häufig um den gewählten Grenzwert herumpendeln, sodass dann die Gurtaufroller-Einheit relativ häufig - und dies auch mit hoher Frequenz - zwischen dem Notfall-Zustand und dem Freigabe-Zustand hin und her schaltet. Dies ist zum einen mit einer störenden Geräuschentwicklung verbunden und führt auch zu einem erhöhten Verschleiß der beteiligten mechanischen Bauteile. Beides ist selbstverständlich unerwünscht: Die erhöhte Geräuschentwicklung wirkt sich negativ auf den Komfort aus; dies umso mehr als es ein besonderer Vorteil von gattungsgemäßen Gurtaufroller-Einheit ist, dass das Gehäuse der Gurtaufroller-Einheit in der Sitzlehne und damit häufig in der Nähe eines Ohres des Insassen angeordnet ist. Der erhöhte Verschleiß ist natürlich schon deshalb nachteilig, da die Lebenserwartung einer Gurtaufroller-Einheit auf die Lebenserwartung des Gesamtfahrzeuges ausgelegt sein sollte.

Zur Lösung des eben beschriebenen Problems erfolgt die Ansteuerung der Aktuatoreinheit durch die Steuereinrichtung nach Art einer Hysterese, nämlich derart, dass es zwei voneinander verschiedene Grenzwerte für den Betrag der horizontalen Beschleunigung gibt, nämlich einen ersten Grenzwert, bei dem die Blockiereinheit von ihrem Freigabe-Zustand in den Notfall-Zustand - im Weiteren: erster Notfallzustand - übergeht und einen zweiten Grenzwert, bei dem die Gurtaufroller-Einheit von ihrem ersten Notfall-Zustand in den Freigabe-Zustand zurückkehrt, wobei dieser zweite Grenzwert betragsmäßig kleiner ist als der erste Grenzwert.

Hierdurch wird ein ständiges Hin- und Herschalten dadurch verhindert, dass die Gurtaufroller-Einheit bei entsprechenden Situationen - insbesondere in entsprechenden Straßenverhältnissen - länger im Notfall-Zustand verbleibt. Dies ist insgesamt für den Benutzer deutlich komfortabler als ein permanentes Hin- und Herschalten zwischen Notfall-Zustand und Freigabe-Zustand. Natürlich wird hiermit auch die Zahl der Schaltspiele reduziert, was sich positiv auf die Lebensdauer der Gurtaufroller-Einheit auswirkt.

Weiterhin ist vorgesehen, dass die Gurtaufroller-Einheit ausgehend von ihrem Notfall-Zustand erst dann in den Freigabe-Zustand übergeht, wenn der Betrag des wenigstens einen horizontalen Beschleunigungswertes für eine vorbestimmte Zeitdauer, welche wenigstens 250 ms beträgt, unterhalb eines dritten Grenzwertes verbleibt, nachdem sie den zweiten Grenzwert unterschritten hat. Dieser dritte Grenzwert liegt hier vorzugsweisen zwischen dem zweiten und dem ersten Grenzwert und kann insbesondere auch identisch mit dem ersten Grenzwert sein.

Wie dies bereits erwähnt wurde, muss die Blockierung der Gurtaufroller-Einheit sowohl bei Auftreten einer hinreichenden Beschleunigung (was zumeist eine negative Beschleunigung, also eine Verzögerung ist) als auch dann erfolgen, wenn das Fahrzeug um mehr als einen vorgegebenen Wert um seine Längs- oder seine Querachse kippt. Bei einer solchen Verkippung neigt sich stets die Z-Achse des Fahrzeugs gegen die Vertikale, sodass man das Maß der Verkippung durch einen einzigen Winkel beschreiben kann. Ein einziger klassischer mechanischer Sensor kann zwischen diesen beiden Fällen nicht unterscheiden. Die Situation bei Verwendung eines elektronischen Sensors ist eine andere: Hier kann zwischen Beschleunigung und Neigung unterschieden werden. Da es natürlich wichtig ist, dass die Gurtaufroller-Einheit sowohl bei Überschreitung eines Beschleunigungsgrenzwertes als auch bei Überschreitung eines Neigungsgrenzwertes vom Freigabe-Zustand in einen Notfall-Zustand übergeht, sollte der Sensor beide Werte messen. Bevorzugt werden diese Werte jedoch von der Schalteinrichtung getrennt verarbeitet, nämlich so, dass bei der Festlegung des ersten Notfallzustandes die Neigung gegen die Vertikalachse nicht berücksichtigt wird. Hierdurch kann die Anzahl der unnötigen Übergange vom Freigabe-Zustand in den ersten Notfall-Zustand, insbesondere bei unebenen Straßen, reduziert werden, da sich herausgestellt hat, dass der Einfluss der unebenen Straßen auf die Beschleunigung in der XY-Ebene oft relativ klein, der Einfluss auf die Verkippung des Fahrzeuges, insbesondere um die X-Achse, jedoch oft relativ groß ist.

Um die Nichtberücksichtigung der Neigung um die Vertikalachse bei Ermittlung des ersten Notfallzustandes auszugleichen, weist die Gurtaufroller-Einheit vorzugsweise einen zweiten Notfall-Zustand auf, in welchem die Gurtspule ebenfalls gegen das Gehäuse blockiert ist und welcher ausschließlich von der Neigung abhängt.

Die Erfindung wird nun anhand eines bevorzugten Ausführungsbeispiels mit Bezug auf die Figuren näher erläutert. Hierbei zeigen:
- Figur 1: Eine schematische Darstellung einer Gurtaufroller-Einheit, wobei der Gurtaufroller dieser Gurtaufroller-Einheit in einer schematischen Seitenansicht dargestellt ist, wobei sich die Steuereinrichtung in einem offenen Schaltzustand befindet und wobei sich der Gurtaufroller in seinem verriegelten Zustand befindet,
- Figur 2: den in Figur 1 gezeigten Gurtaufroller in einer schematischen Draufsicht von oben aus Richtung R1,
- Figur 3: das in Figur 1 Gezeigte, wobei sich die Steuereinrichtung in ihrem geschlossenen Schaltzustand befindet und sich der Gurtaufroller in seinem entriegelten Zustand befindet,
- Figur 4a: eine Seitenansicht eines Autos sowie die zugehörigen Koordinaten,
- Figur 4b: eine Draufsicht auf das Auto aus Figur 4a von oben sowie die zugehörigen Koordinaten,
- Figur 4c: eine Draufsicht auf das Auto aus Figur 4a von hinten sowie die zugehörigen Koordinaten,
- Figur 5: das Auto in der Darstellung der Figur 4a bei einem Frontalzusammenstoß,
- Figur 6: das Auto in der Darstellung der Figur 4b bei einem seitlichen Zusammenstoß,
- Figur 7: das Auto in ein einer Darstellung der Figur 4a, wenn es um die Y-Achse gekippt ist,
- Figur 8: das Auto in ein einer Darstellung der Figur 4c, wenn es um die X-Achse gekippt ist,
- Figur 9a: eine detailliertere Darstellung eines Ausführungsbeispiels einer Steuereinrichtung, wie sie in den Figuren 1 und 3 vereinfacht dargestellt ist, wobei sie sich in ihrem Freigabezustand befindet,
- Figur 9b: die Steuereinrichtung aus Figur 9a, wobei sie sich in ihrem ersten Notfallzustand befindet,
- Figur 9c: die Steuereinrichtung aus Figur 9a, wobei sie sich in ihrem zweiten Notfallzustand befindet,
- Figur 9d: die Steuereinrichtung aus Figur 9a, wobei sie sich in einem doppelten Notfallzustand befindet,
- Figur 10: ein Flussdiagramm eines ersten bevorzugten Steuerungsablaufs der Logikeinheit,
- Figuren 11a und 11b: eine schematische Darstellung eines mechanischen Analogons des linken Zweigs des in Figur 10 gezeigten Steuerungsablaufs und
- Figur 12: ein Flussdiagramm eines zweiten bevorzugten Steuerungsablaufs der ersten Logik-Teileinheit.

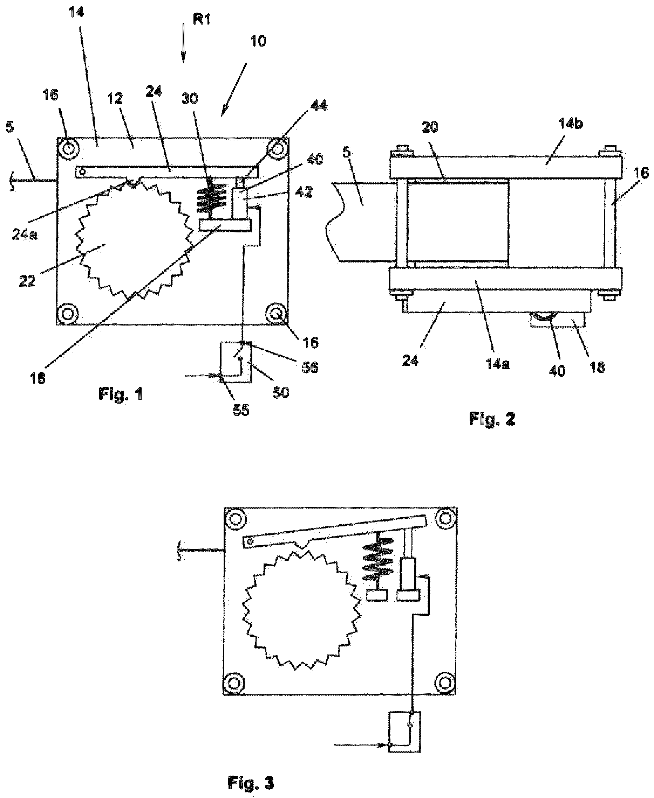

Mit Bezug auf die Figuren 1 und 2 werden zunächst die wesentlichen Merkmale einer erfindungsgemäßen Gurtaufroller-Einheit beschreiben. Hier ist zu beachten, dass die Darstellungen sehr schematisch sind und lediglich die Grundprinzipien der Erfindung darstellen. Die Gurtaufroller-Einheit kann man als aus dem Gurtausroller 10 und der Steuereinrichtung 50 bestehend betrachten. Hierbei könnte die Steuereinrichtung 50 unmittelbar mit dem Gehäuse des Gurtaufrollers 10 verbunden sein, muss dies aber nicht, weswegen sie in den Figuren 1 und 3 auch als vom Gehäuse entfernt dargestellt ist. Natürlich müssen Steuereinrichtung und Gurtaufroller elektrisch miteinander verbunden sein.

Im Folgenden sind elektrische Leitungen nur schematisch (und nicht mit Hin- und Rückleitung) dargestellt. Hierbei sind Leistungsleitungen als durchgezogene Linien und Signalleitungen als Linien mit dem Muster "Strich-Doppelpunkt-Strich" dargestellt.

Der Gurtaufroller 10 besteht, wie gewöhnlich, aus einem Gehäuse 10, einer drehbar im Gehäuse gelagerte Gurtspule 20, auf welcher ein Abschnitt eines Gurtbands 5 aufgewickelt ist, und einer Blockiereinheit zur Blockierung der Gurtspule 20 im Gehäuse 12. Im gezeigten Ausführungsbeispiel weist das Gehäuse 12 zwei über Verbindungsbolzen 16 verbundene Gehäuseplatten 14a, 14b auf, dies ist jedoch nur als beispielhaft zu verstehen. In der Regel, und dies ist hier auch dargestellt, weist die Blockiereinheit ein drehfest mit der Gurtspule 20 verbundenes Blockierrad 22 auf. Es ist weiterhin eine Sperrklinke 24a vorgesehen, welche im Blockierzustand (Notfallzustand) (Figur 1) das Blockierrad 22 und damit die Gurtspule 20 gegen das Gehäuse 12 blockiert, im Freigabezustand (Figur 3) jedoch nicht.

Wesentlich ist, dass die Position der Sperrklinke 24a direkt (wie gezeigt) oder indirekt von einer einen Elektromagneten 42 aufweisenden Aktuatoreinheit 40 gesteuert wird. Im gezeigten Ausführungsbeispiel ist diese Beeinflussung dadurch gegeben, dass die Aktuatoreinheit 40 außer dem Elektromagneten 42 einen vom Elektromagneten angetriebenen Stößel 44 aufweist, welcher auf einen Hebel 24 wirkt, welcher die Sperrklinke 24a trägt. Wird der Elektromagnet von einem hinreichend starken Strom durchflossen, drückt er den Stößel 44 nach außen. Wie bereits erwähnt, ist jedoch festzuhalten, dass diese Konstruktion nur als beispielhaft zu verstehen ist. Wesentlich ist, dass die Blockiereinheit einen Elektromagneten derart aufweist, dass die Aktuatoreinheit abhängig vom Stromfluss durch den Magneten die Blockiereinheit steuert. In der Regel, und dies ist auch dargestellt, ist eine Feder, hier eine Zugfeder 30, oder ein anderes elastisches Element vorgesehen, welche den Zustand der Blockiereinheit eindeutig definiert, wenn der Elektromagnet 42 der Aktuatoreinheit 40 stromlos ist und somit keine Kraft auf den von ihm angetriebenen Stößel ausübt. Dieser stromlose Zustand ist, wie dies auch in den Figuren dargestellt ist, der verriegelte Zustand.

Derartige elektrisch gesteuerte Blockiereinheiten mit einem Elektromagneten sind im Stand der Technik bekannt. Die Erfindung betrifft deshalb auch ausschließlich die Ansteuerung des Elektromagneten, also die Steuereinrichtung 50.

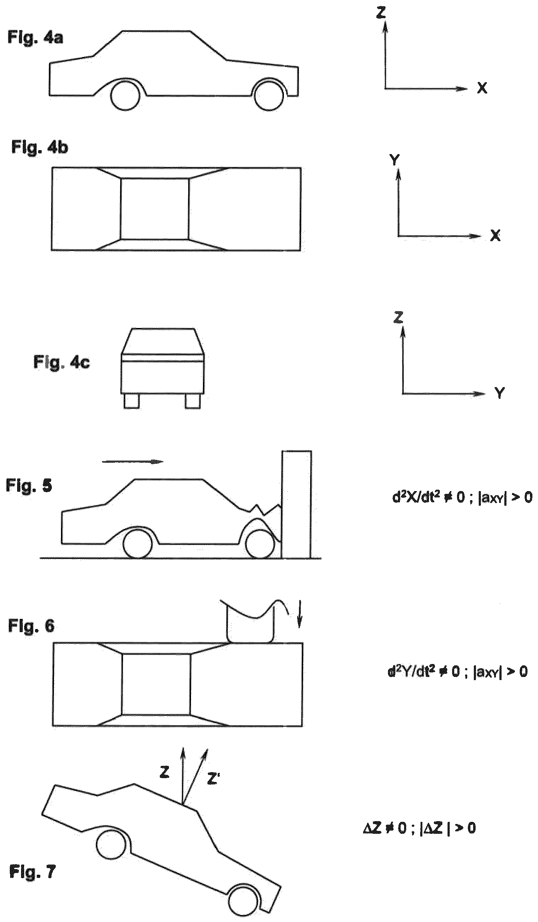

In Vorbereitung der detaillierten Beschreibung der Erfindung anhand der Beschreibung der Steuereinrichtung und ihrer Funktionsweise werden zunächst mit Bezug auf die Figuren 4a bis 8 einige allgemeine Ausführungen gemacht und Definitionen getroffen:
Die Figur 4a zeigt eine schematische Seitenansicht eines Autos sowie die zugehörigen Koordinaten, nämlich die Längsrichtung X und die Vertikalrichtung Z, die Figur 4b zeigt das in Figur 4a Gezeigte in einer Draufsicht sowie ebenfalls die zugehörigen Koordinaten, nämlich die Längsrichtung X und die Querrichtung Y, Figur 4c zeigt das Auto der Figuren 4a und 4b in einer Ansicht von hinten sowie die zugehörigen Koordinaten, nämlich die Querrichtung Y und die Vertikalrichtung Z.

Figur 5 zeigt einen typischen Frontalcrash. Hierbei ändert sich die Geschwindigkeit in X-Richtung, das heißt, die zweite Ableitung der X-Koordinate nach der Zeit ist ungleich 0: d²X/dt² ≠ 0 und der Betrag der Beschleunigung in X-Richtung und somit auch in der XY-Ebene ist größer 0: |a_{XY}| > 0. Dementsprechend gilt bei einem seitlichen Aufprall (Figur 6), dass die zweite Ableitung der Y-Koordinate nach der Zeit ungleich 0 ist: d²Y/dt² ≠ 0; auch hier ist der Betrag der Beschleunigung in der XY-Ebene größer 0: |a_{XY}| > 0. Dies bedeutet, dass ein Kriterium zur Verriegelung des Gurtbandes ist, dass der Betrag der Beschleunigung in der XY-Ebene einen vorbestimmten Grenzwert überschreitet.

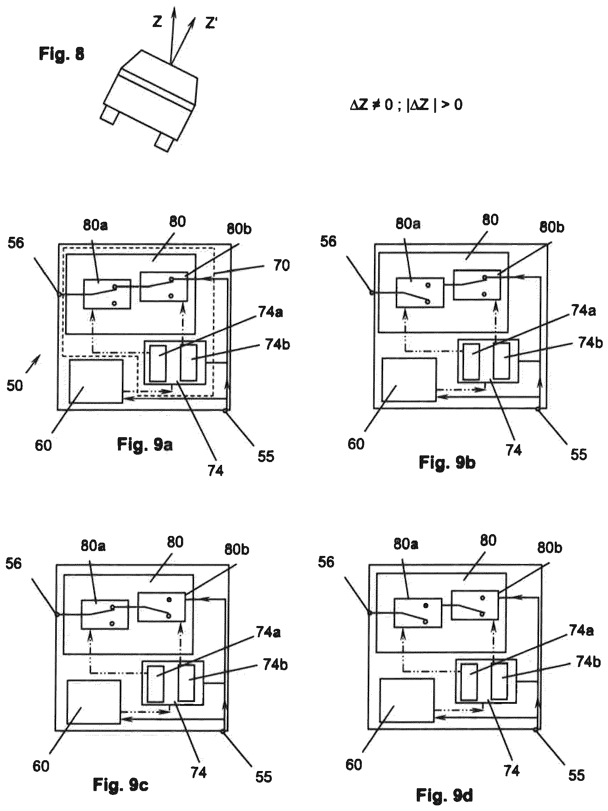

Die Figuren 7 und 8 zeigen ein anderes Szenario, welches zur Verriegelung des Gurtbandes führen muss, nämlich ein Kippen des Fahrzeuges. Ein Kippen des Fahrzeuges bedeutet stets, dass die Z-Koordinate des Fahrzeugs (hier als Z' bezeichnet) gegenüber der Vertikalrichtung Z geneigt ist. Das Verriegelungskriterium sollte hier sein, dass die Neigung - diese kann man durch den zwischen Z und Z' eingeschlossenen Winkel ΔZ ausdrücken - einen vorbestimmten Wert überschreitet. Auf die Dynamik (also auf die Geschwindigkeit oder Beschleunigung der Änderung) kommt es hier ebenso wenig an wie auf die Richtung, deshalb kann ein Betrag von ΔZ als Grenzwert für die Verriegelung festgelegt werden.

Im nachfolgend beschriebenen bevorzugten Ausführungsbeispiel werden alle relevanten Orientierungs- und Beschleunigungsdaten von einer gemeinsamen Sensoreinrichtung gemessen, von einer dieser nachgeordneten Schalteinrichtungen jedoch separat verarbeitet. Dies wird zunächst an einem schematischen Schaltbild erläutert. Hierbei ist zu betonen, dass dieses Schaltbild nur eine Möglichkeit darstellt. Die entsprechende Auftrennung der Informationen kann auch schaltechnisch oder softwareseitig anders erfolgen.

Die Figur 9a zeigt ein schematisches Ausführungsbeispiel einer Steuereinrichtung 50. Diese Steuereinrichtung 50 kann als Steuereinheit ausgebildet sein, welche alle relevanten Bauteile enthält; es ist jedoch auch möglich, dass einzelne Elemente der Steuereinrichtung "über das Fahrzeug verteilt" sind, was jedoch in der Regel nicht bevorzugt ist.

Wie dies bereits erwähnt wurde, dient die Steuereinrichtung 50 dazu, den Stromfluss vom Bordnetz zum Elektromagneten 42 zu steuern, das heißt freizugeben und zu unterbrechen. Sie weist deshalb einen mit dem Bordnetz verbundenen Leistungseingang 55 und einen mit dem Elektromagneten verbundenen Leistungsausgang 56 und eine dazwischen angeordnete Schalteinheit 80 auf. Im geschlossenen Zustand der Schalteinheit fließt Strom des Bordnetzes durch den Elektromagneten, im offenen Zustand der Schalteinheit 80 nicht. An dieser Stelle ist noch zu erwähnen, dass ein als Konstantstromquelle wirkender Gleichstrom-Gleichstrom-Wandler vorgesehen sein könnte, um im geschlossenen Zustand der Schalteinheit den Elektromagneten mit nur so viel Strom zu versorgen, wie er benötigt. Dieser könnte auch zweistufig ausgebildet sein, so dass er einen Einschaltstrom und einen geringeren Haltestrom liefert. Dies ist nachfolgend jedoch nicht im Detail dargestellt.

Die Steuereinrichtung 50 weist außer der eben erwähnten Schalteinheit 80 eine Sensoreinrichtung 60 und eine Logikeinheit 74 auf. Diese Logikeinheit 74 und die Schalteinheit 80 bilden zusammen die Schalteinrichtung 70.

Die Sensoreinrichtung 60 (welche man auch einfach als Sensor bezeichnen könnte), ist im gezeigten bevorzugten Ausführungsbeispiel ein Dreiachssensor, welcher die Orientierung und die Beschleunigung in allen drei Raumrichtungen kontinuierlich misst und die Messdaten an die Schalteinrichtung 70 weitergibt. Diese Schalteinrichtung besteht, wie eben erwähnt, zumindest funktional aus der Logikeinheit 74 und der Schalteinheit 80.

Die von der Sensoreinrichtung 60 gelieferten Daten werden von der Logikeinheit 74 in zwei getrennten Vorgängen verarbeitet: In einem Vorgang wird nur die Beschleunigung in der XY-Ebene verarbeitet, in einem anderen die Verkippung um die Z-Achse, weswegen die Logikeinheit 74 zumindest funktional eine erste Logik-Teileinheit 74a, welche die Beschleunigungsauswertung in der XY-Ebene übernimmt, und eine zweite Logik-Teileinheit 74b, welche die Kippauswertung übernimmt, aufweist. Im gezeigten Ausführungsbeispiel steuern diese beiden Logik-Teileinheiten 74a und 74b zwei in Reihe geschaltete Schalter 80a, 80b an, welche wiederum die Schalteinheit 80 bilden. Dieses Ausführungsbeispiel der Schalteinheit ist insbesondere zum Zwecke der anschaulichen Darstellung gewählt, könnte jedoch auch in Praxis so ausgebildet sein.

Wie oben beschrieben, ist der stromlose Zustand des Elektromagneten 42 der verriegelte Zustand des Gurtaufrollers 10 (Figur 1), während der stromdurchflossene Zustand der entriegelte Zustand ist.

Wie dies eben erwähnt wurde, weist die Logikeinheit 74 eine erste Logik-Teileinheit 74a, welche die Beschleunigungswerte in der XY-Ebene auswertet, und eine zweite Logik-Teileinheit 74b, welche die Kippwerte ΔZ auswertet, auf. Natürlich soll der entriegelte Freigabezustand (der stromdurchflossene Zustand des Elektromagneten) nur dann vorliegen, wenn beide Logik-Teileinheiten 74a, 74b zu dem Ergebnis "entriegeln" kommen. Dies ist hier schaltungstechnisch derart verwirklicht, dass die erste Logik-Teileinheit 74a den ersten Schalter 80a der Schalteinheit 80 und die zweite Logik-Teileinheit 74b den zweiten Schalter 80b der Schalteinheit 80 ansteuert. Da diese beiden Schalter 80a, 80b in Reihe geschaltet sind, müssen beide Schalter 80a, 80b auf Durchfluss stehen, also geschlossen sein (Figur 8a), um den entriegelten Zustand (Freigabe-Zustand) zu erzeugen. In allen anderen Fällen (Figuren 9b bis 9d) liegt ein verriegelter Zustand (Notfall-Zustand) vor. Diese Schaltung bildet hinsichtlich des entriegelten Zustandes also ein logisches UND.

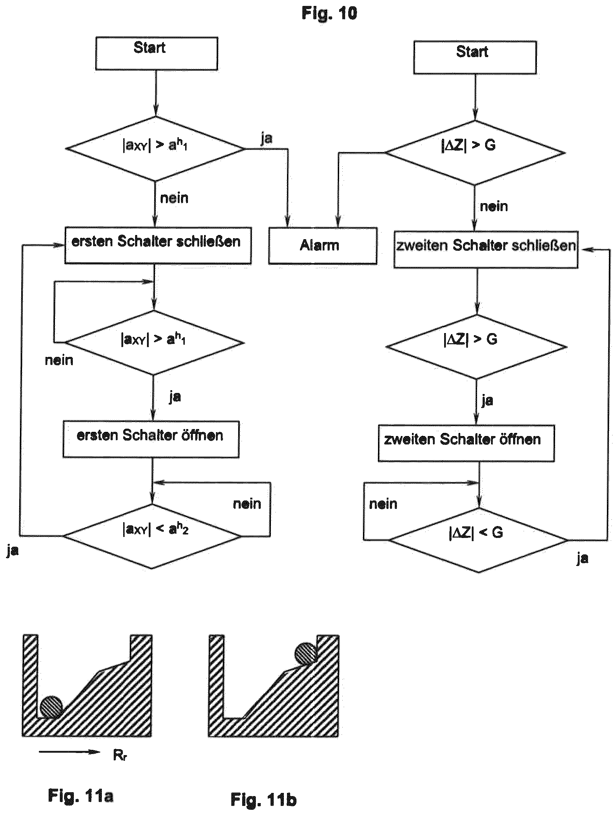

Mit Bezug auf die Figur 10 wird nun ein erster erfindungsgemäßer Algorithmus, welcher von der Logikeinheit 74 durchgeführt wird, beschrieben. Wie dies oben bereits angedeutet wurde, arbeiten die beiden Logik-Teileinheiten 74a und 74b parallel zueinander und vorzugsweise voneinander unabhängig. Im Flussdiagramm der Figur 10 zeigt der linke Baum das Flussdiagramm der ersten Logik-Teileinheit 74a und der rechte Baum das Flussdiagramm der zweiten Logik-Teileinheit 74b. Die relevante Messgröße für die erste Logik-Teileinheit 74a ist der Betrag der Beschleunigung in der XY-Ebene, also der horizontalen Beschleunigung |a_{XY}|. Der Ablauf ist wie folgt:
Nach Start des Fahrzeuges kann in einem ersten Schritt überprüft werden, ob der Betrag der Beschleunigung in der XY-Ebene |a_{XY}| kleiner als ein erster Grenzwert a^{h}₁ ist. Da das Fahrzeug zu diesem Zustand stehen sollte, kann beispielsweise ein Alarm ausgelöst werden, wenn der Beschleunigungswert größer als dieser Grenzwert ist, da dies darauf hindeutet, dass entweder ein technischer Defekt oder eine sehr ungewöhnliche Situation vorliegt. Liegt hingegen der Betrag des Beschleunigungswertes unter dem ersten Grenzwert a^{h}₁, so steuert die erste Logik-Teileinheit 74a den ersten Schalter 80a so an, dass dieser in seinen geschlossenen Zustand entsprechen der Figur 9a übergeht.

Die eben beschriebene Überprüfung wird fortlaufend durchgeführt. Solange der Betrag der Beschleunigung in der XY-Ebene den ersten Grenzwert a^{h}₁ nicht überschreitet, bleibt der erste Schalter 80a geschlossen. Wird der erste Grenzwert a^{h}₁ jedoch überschritten, so wird der erste Schalter 80a geöffnet und es liegt der erste Notfall-Zustand vor, welcher bedeutet, dass aufgrund einer Beschleunigung in der XY-Ebene der Elektromagnet 42 stromlos geschaltet und somit die Gurtspule 20 gegen das Gehäuse 12 verriegelt wird. Der erfindungsgemäße Schritt folgt nun: Nachdem der Schalter geöffnet wurde, überprüft die erste Logik-Teileinheit 74a nun, ob der Betrag der Beschleunigung in der XY-Ebene |a_{XY}| unter einen zweiten Grenzwert a^{h}₂ sinkt, wobei dieser zweite Grenzwert a^{h}₂ kleiner ist als der erste Grenzwert a^{h}₁. Solange dies nicht der Fall ist, bleibt der erste Schalter 80a geschlossen und somit der erste Notfall-Zustand erhalten. Erst wenn der Betrag der Beschleunigung in der XY-Ebene |a_{XY}| auch unter diesen zweiten Grenzwert a^{h}₂ sinkt, wird der erste Schalter 80a wieder geschlossen und der erste Notfallzustand liegt nicht mehr vor. Vorzugsweise beträgt der zweite Grenzwert a^{h}₂ zwischen 20 % und 80 % des ersten Grenzwertes a^{h}₁.

Das mechanische Analogon ist in den Figuren 11a und 11b gezeigt: Um die Kugel aus ihrem Minimum zu bewegen, muss die auf sie in radialer Richtung Rᵣ wirkende Kraft einen ersten Grenzwert überschreiten, sodass sie die steilere Rampe erklimmen kann. Dann gelangt sie auf eine flachere Rampe, sodass sie dort unter Aufbringung einer geringeren in radialer Richtung wirkenden Haltekraft verbleibt.

Erst wenn diese einen zweiten Grenzwert, welcher kleiner als der erste Grenzwert ist, unterschreitet, kann die Kugel wieder in ihre Ausgangsposition zurückkehren.

Parallel zum eben Beschriebenen überprüft die zweite Logik-Teileinheit 74b permanent den Betrag der Verkippung des Fahrzeuges |ΔZ|. Auch hier kann nach dem Start zunächst überprüft werden, ob |ΔZ| einen Grenzwert G überschreitet. Ist dies bereits zum Start des Fahrzeuges der Fall, so ist auch hier von einem ungewöhnlichen Zustand oder einem technischen Defekt auszugehen. Ist hingegen |ΔZ| kleiner als der Grenzwert G, so wird auch der zweite Schalter 80b geschlossen und die Gurtaufroller-Einheit liegt insgesamt in ihrem Freigabe-Zustand vor (Figur 9a) vor.

Auch die Überprüfung, ob |ΔZ| den Grenzwert G überschreitet, wird fortlaufend durchgeführt. Solange dieser Grenzwert nicht überschritten wird, bleibt der zweite Schalter 80b geschlossen, wird er jedoch überschritten, so wird der zweite Schalter 80b geöffnet und die Gurtaufroller-Einheit liegt dann gemäß den hier getroffenen Definitionen in ihrem zweiten Notfall-Zustand vor. Je nachdem, ob gleichzeitig auch der erste Notfall-Zustand vorliegt (was der Fall sein kann, aber nicht muss) liegt entweder der Schaltzustand der Figur 9c oder der Schaltzustand der Figur 9d vor. Aufgrund der UND-Schaltung liegt der Freigabe-Zustand (Figur 9a) jedoch nur vor, wenn beide Notfall-Zustände nicht vorliegen.

Unterschreitet |ΔZ| wieder den Grenzwert G, so wird der zweite Schalter wieder geschlossen. Eine Hysterese ist hier nicht notwendig, wäre jedoch ebenfalls möglich.

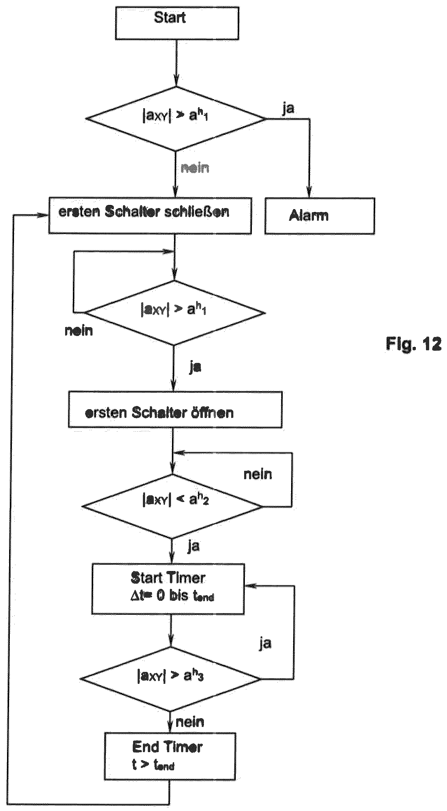

Die Figur 12 zeigt ein zweites Ausführungsbeispiel des linken Flussdiagrammes, also der Funktionsweise der ersten Logik-Teileinheit 54a:
Wie man sieht, ist der Funktionsablauf zunächst identisch zum oben beschriebenen, allerdings folgt nach dem Unterschreiten des zweiten Grenzwertes a^{h}₂ ein weiterer Schritt, bevor der erste Schalter 80a wieder geschlossen wird. Es wird nämlich ein Timer gestartet und während eines gewählten Zeitintervalls Δt, von beispielsweise 500 oder 1.000 ms, wird fortlaufend überprüft, ob der Betrag der Beschleunigung in XY-Ebene |a_{XY}| einen dritten Grenzwert a^{h}₃ überschreitet. Dieser dritte Grenzwert a^{h}₂ kann identisch zum ersten Grenzwert a^{h}₁ sein aber auch zwischen dem ersten Grenzwert a^{h}₁ und dem zweiten Grenzwert a^{h}₂ liegen. Sobald eine entsprechende Überschreitung des dritten Grenzwertes a^{h}₃ festgestellt wird, fängt das Zeitintervall wieder von vorne an. Erst wenn in einem zusammenhängenden Zeitintervall Δt keine Überschreitung des dritten Grenzwertes a^{h}₃ stattfindet, wird der erste Schalter wieder geschlossen, sodass die Gurtaufroller-Einheit ihren ersten Notfall-Zustand wieder verlässt.

Mit den beschriebenen Maßnahmen wird erreicht, dass trotz niedriger Grenzwerte für die Verriegelung der Gurtspule eine große Anzahl von Schaltspielen vermieden wird.

### Bezugszeichenliste

- 10: Gurtaufroller
- 12: Gehäuse
- 14a,b: Gehäuseplatte
- 16: Verbindungsbolzen
- 18: Halterung für Feder und Aktuatoreinheit
- 20: Gurtspule
- 22: Blockierrad
- 24: Hebel
- 24a: Sperrklinke
- 30: Zugfeder
- 40: Aktuatoreinheit
- 42: Elektromagnet
- 44: Stößel
- 50: Steuereinrichtung
- 55: Leistungseingang
- 56: Leistungsausgang
- 60: Sensoreinrichtung
- 70: Schalteinrichtung
- 74: Logikeinheit
- 74a: erste Logik-Teileinheit (Beschleunigungsauswertung in der X-Y-Ebene)
- 74b: zweite Logik-Teileinheit (Kipp-Auswertung ΔZ)
- 80: Schalteinheit
- 80a: erster Schalter
- 80b: zweiter Schalter

## Patentansprüche

1. Gurtaufroller-Einheit mit
einem Gehäuse (12),
einer in diesem Gehäuse (12) drehbar gelagerten Gurtspule (20),
einer Blockiereinheit zur Blockierung der Gurtspule (20) gegen das Gehäuse (12), wobei die Blockiereinheit eine elektrisch ansteuerbare Aktuatoreinheit (40) aufweist,
einer Steuereinrichtung (50) zur Ansteuerung der Aktuatoreinheit (40), welche eine Sensoreinrichtung (60) zur kontinuierlichen Messung wenigstens eines horizontalen Beschleunigungswertes und eine Schalteinrichtung (70) zur Ansteuerung der Aktuatoreinheit (40) in Abhängigkeit zumindest des wenigstens einen horizontalen Beschleunigungswertes aufweist,
wobei
die Gurtaufroller-Einheit einen ersten Notfall-Zustand, in welchem der Betrag des wenigstens einen horizontalen Beschleunigungswertes (|a_{XY}|) über einem ersten Grenzwert (a^{h}₁) liegt und in dem die Gurtspule (20) gegen das Gehäuse (12) blockiert ist, und einen Freigabe-Zustand, in welchem der Betrag des wenigstens einen horizontalen Beschleunigungswertes (|a_{XY}|)unter dem ersten Grenzwert (a^{h}₁) liegt und in dem die Gurtspule (20) nicht gegen das Gehäuse (12) blockiert ist, aufweist,
**dadurch gekennzeichnet, dass**
die Gurtaufroller-Einheit ausgehend vom ersten Notfall-Zustand nicht in den Freigabe-Zustand übergeht, solange der Betrag des wenigstens einen horizontalen Beschleunigungswertes (|a_{XY}|) nicht unter einen zweiten Grenzwert (a^{h}₂), welcher kleiner als der erste Grenzwert (a^{h}₁) ist, gesunken ist und
die Gurtaufroller-Einheit ausgehend vom ersten Notfall-Zustand erst in den Freigabe-Zustand übergeht, wenn der Betrag des wenigstens einen horizontalen Beschleunigungswertes (|a_{XY}|) für wenigstens eine Zeitdauer von 250 ms einen dritten Grenzwert (a^{h}₃) nicht wieder übersteigt.

2. Gurtaufroller-Einheit nach Anspruch 1, **dadurch gekennzeichnet, dass** sie ausgehend vom ersten Notfall-Zustand erst in den Freigabe-Zustand übergeht, wenn der Betrag des wenigstens einen horizontalen Beschleunigungswertes (|a_{XY}|) für wenigstens eine Zeitdauer von 500 ms den dritten Grenzwert (a^{h}₃) nicht wieder übersteigt.

3. Gurtaufroller-Einheit nach Anspruch 1 oder Anspruch 2, **dadurch gekennzeichnet, dass** der dritte Grenzwert (a^{h}₃) größer als der zweite Grenzwert (a^{h}₂) und kleiner oder gleich dem ersten Grenzwert (a^{h}₁) ist.

4. Gurtaufroller-Einheit nach einem der Ansprüche 1 bis 3, **dadurch gekennzeichnet, dass** die Sensoreinrichtung (60) weiterhin ihre Neigung (ΔZ) gegen die Vertikalachse misst und an die Schalteinrichtung (70) übermittelt, diese die Neigung (ΔZ) bei der Festlegung des ersten Notfall-Zustandes jedoch nicht berücksichtigt.

5. Gurtaufroller-Einheit nach Anspruch 4, **dadurch gekennzeichnet, dass** die Gurtaufroller-Einheit einen zweiten Notfall-Zustand aufweist, in welchem die Neigung (ΔZ) einen Neigungs-Grenzwert (G) übersteigt und in welchem die Gurtspule (20) gegen das Gehäuse (12) blockiert ist.

6. Gurtaufroller-Einheit nach Anspruch 5, **dadurch gekennzeichnet, dass** der zweite Notfall-Zustand unabhängig vom Betrag des horizontalen Beschleunigungswerts (|a_{XY}|) ist.

7. Gurtaufroller-Einheit nach einem der vorangehenden Ansprüche, **dadurch gekennzeichnet, dass** die Sensoreinrichtung (60) einen 3-Achs-Sensor aufweist.

## Claims

1. Belt retractor unit comprising
a housing (12),
a belt reel (20) rotatably mounted in said housing (12),
a blocking unit for blocking the belt reel (20) against the housing (12), the blocking unit having an electrically activatable actuator unit (40),
a control device (50) for activating the actuator unit (40), which has a sensor device (60) for continuously measuring at least one horizontal acceleration value and a switching device (70) for activating the actuator unit (40) depending on at least the at least one horizontal acceleration value,
the belt retractor unit having a first emergency state in which the magnitude of the at least one horizontal acceleration value (|a_{XY}|) is above a first limit value (a^{h}₁) and in which the belt reel (20) is blocked against the housing (12), and a release state in which the magnitude of the at least one horizontal acceleration value (|a_{XY}|) is below the first limit value (a^{h}₁) and in which the belt reel (20) is not blocked against the housing (12),
**characterized in that**
the belt retractor unit does not transition from the first emergency state into the released state as long as the magnitude of the at least one horizontal acceleration value (|a_{XY}|) has not dropped below a second limit value (a^{h}₂) which is less than the first limit value (a^{h}₁), and
the belt retractor unit transitions from the first emergency state to the release state only when the magnitude of the at least one horizontal acceleration value (|a_{XY}|) does not exceed a third limit value (a^{h}₃) again for at least a period of 250 ms.

2. Belt retractor unit according to claim 1, **characterized in that,** it transitions from the first emergency state to the release state only when the magnitude of the at least one horizontal acceleration value (|a_{XY}|) does not exceed the third limit value (a^{h}₃) again for at least a period of 500 ms.

3. Belt retractor unit according to claim 1 or claim 2, **characterized in that** the third limit value (a^{h}₃) is greater than the second limit value (a^{h}₂) and is less than or equal to the first limit value (a^{h}₁).

4. Belt retractor unit according to any of claims 1 to 3, **characterized in that** the sensor device (60) furthermore measures its inclination (ΔZ) against the vertical axis and transmits it to the switching device (70), but this does not take into account the inclination (ΔZ) when determining the first emergency state.

5. Belt retractor unit according to claim 4, **characterized in that** the belt retractor unit has a second emergency state in which the inclination (ΔZ) exceeds an inclination limit value (G) and in which the belt reel (20) is blocked against the housing (12).

6. Belt retractor unit according to claim 5, **characterized in that** the second emergency state is independent of the magnitude of the horizontal acceleration value (|a_{XY}|).

7. Belt retractor unit according to any of the preceding claims, **characterized in that** the sensor device (60) comprises a 3-axis sensor.

## Revendications

1. Unité formant enrouleur de ceinture comportant
un boîtier (12),
une bobine de ceinture (20) montée de manière à pouvoir tourner dans ledit boîtier (12),
une unité de blocage permettant de bloquer la bobine de ceinture (20) contre le boîtier (12), dans laquelle l'unité de blocage présente une unité formant actionneur (40) pouvant être commandée électriquement,
un dispositif de commande (50) pour la commande de l'unité formant actionneur (40), lequel présente un dispositif formant capteur (60) pour la mesure continue d'au moins une valeur d'accélération horizontale et un dispositif de commutation (70) pour la commande de l'unité formant actionneur (40) en fonction d'au moins l'au moins une valeur d'accélération horizontale,
dans laquelle
l'unité formant enrouleur de ceinture présente un premier état d'urgence dans lequel la valeur absolue de l'au moins une valeur d'accélération horizontale (|a_{XY}|) est supérieure à une première valeur limite (a^{h}₁) et dans lequel la bobine de ceinture (20) est bloquée contre le boîtier (12), et un état de libération dans lequel la valeur absolue de l'au moins une valeur d'accélération horizontale (|a_{XY}|) est inférieure à la première valeur limite (a^{h}₁) et dans lequel la bobine de ceinture (20) n'est pas bloquée contre le boîtier (12),
**caractérisée en ce que**
l'unité formant enrouleur de ceinture ne passe pas du premier état d'urgence à l'état de libération tant que la valeur absolue de l'au moins une valeur d'accélération horizontale (|a_{XY}|) n'est pas descendue en dessous d'une deuxième valeur limite (a^{h}₂) qui est inférieure à la première valeur limite (a^{h}₁) et
l'unité formant enrouleur de ceinture ne passe du premier état d'urgence à l'état de libération que lorsque la valeur absolue de l'au moins une valeur d'accélération horizontale (|a_{XY}|) ne dépasse pas à nouveau une troisième valeur limite (a^{h}₃) pendant au moins une durée de 250 ms.

2. Unité formant enrouleur de ceinture selon la revendication 1, **caractérisée en ce qu'**elle ne passe du premier état d'urgence à l'état de libération que lorsque la valeur absolue de l'au moins une valeur d'accélération horizontale (|a_{XY}|) ne dépasse pas à nouveau la troisième valeur limite (a^{h}₃) pendant au moins une durée de 500 ms.

3. Unité formant enrouleur de ceinture selon la revendication 1 ou la revendication 2, **caractérisée en ce que** la troisième valeur limite (a^{h}₃) est supérieure à la deuxième valeur limite (a^{h}₂) et est inférieure ou égale à la première valeur limite (a^{h}₁).

4. Unité formant enrouleur de ceinture selon l'une des revendications 1 à 3, **caractérisée en ce que** le dispositif formant capteur (60) mesure en outre son inclinaison (ΔZ) par rapport à l'axe vertical et la transmet au dispositif de commutation (70), ce dernier ne tient cependant pas compte de l'inclinaison (ΔZ) lors de la définition du premier état d'urgence.

5. Unité formant enrouleur de ceinture selon la revendication 4, **caractérisée en ce que** l'unité formant enrouleur de ceinture présente un second état d'urgence dans lequel l'inclinaison (ΔZ) dépasse une valeur limite d'inclinaison (G) et dans lequel la bobine de ceinture (20) est bloquée contre le boîtier (12).

6. Unité formant enrouleur de ceinture selon la revendication 5, **caractérisée en ce que** le second état d'urgence est indépendant de la valeur absolue de la valeur d'accélération horizontale (|a_{XY}|).

7. Unité formant enrouleur de ceinture selon l'une des revendications précédentes, **caractérisée en ce que** le dispositif formant capteur (60) présente un capteur 3 axes.
